# EUROPEAN PATENT APPLICATION

(11) **EP 4 775 372 A1**
(43) Date of publication of application: **15.07.2026**
(21) Application number: 26150605.9
(22) Date of filing: 07.01.2026
(51) Int. Cl.: B29C 33/22, B29C 33/26, B29C 44/58

(54) **VERTICAL DRAW-GROOVE MOLD**

(30) Priority: 14.01.2025 CN 202510053822
(71) Applicant: Adient (Chongqing) Automotive Components Co., Ltd., Liangjiang New Area, Chongqing 401122 (CN)
(72) Inventor: XIAO, Qiansheng, Chongqing, Liangjiang New Area, 401122 (CN); LI, Chaolun, Chongqing, Liangjiang New Area, 401122 (CN); ZHANG, Jingyi, Chongqing, Liangjiang New Area, 401122 (CN); DING, Zaisheng, Chongqing, Liangjiang New Area, 401122 (CN); PENG, Jian, Chongqing, Liangjiang New Area, 401122 (CN)
(74) Representative: Liedtke & Partner Patentanwälte

(57) **Abstract**

The present invention discloses a vertical draw-groove mold, comprising an upper mold (1) and a lower mold (2) which are arranged vertically opposite each other, wherein a first core (3) movable up and down is mounted on a lower side of one end of the upper mold (1); a second core (6) capable of flipping outward is mounted on a lower side of the first core (3); the upper mold (1) is configured with a first drive mechanism and a second drive mechanism, the first drive mechanism is used to drive the first core (3) to move up and down, and the second drive mechanism is used to drive the second core (6) to flip inward or outward on the lower side of the first core (3); and when the first core (3) moves up to abut against a lower side of the upper mold (1), and the second core (6) flips inward to abut against the lower side of the first core (3), inner sides of the first core (3) and the second core (6) are able to combine to form a shaping surface, the shaping surface being used to form a vertical styling groove (9a). The beneficial effect is that, by the combined design of the first core (3) and the second core (6), while ensuring that the styling groove (9a) can be formed, the microscopic gap between the first core (3) and the second core (6) can facilitate the air permeability of the foam during the foaming process, thereby avoiding defects after foaming.

## Description

### Technical Field

The present invention relates to the technical field of mold processing, and specifically to a vertical draw-groove mold.

### Background Art

As vehicle mileage continues to increase, the functions and shapes of vehicle parts are becoming more and more complex. However, some functions and shapes are disadvantageous for the manufacturing of vehicle foamed products. For example, adding styling grooves to the vertical surface of seat cushion foam is a typical structure.

Since the styling grooves are formed on the vertical sidewalls of the products, a core is usually provided in the mold at the corresponding position of the styling groove during the foaming process. However, the provision of the core not only hinders the upward expansion of the foam, but also causes trapped air to form on the upper and lower sides of the styling grooves, resulting in product defects. Repairing defective products is very time-consuming and labor-intensive.

### Summary of the Invention

In view of this, the present invention provides a vertical draw-groove mold, which is intended to improve the yield of foamed products with styling grooves.

To achieve the above objective, the technical solution of the present invention is as follows:
A vertical draw-groove mold, comprising an upper mold and a lower mold which are arranged vertically opposite each other, wherein: a first core movable up and down is mounted on a lower side of one end of the upper mold; a second core capable of flipping outward is mounted on a lower side of the first core; the upper mold is configured with a first drive mechanism and a second drive mechanism, the first drive mechanism is used to drive the first core to move up and down, and the second drive mechanism is used to drive the second core to flip inward or outward on the lower side of the first core; and when the first core moves up to abut against a lower side of the upper mold, and the second core flips inward to abut against the lower side of the first core, inner sides of the first core and the second core are able to combine to form a shaping surface, the shaping surface being used to form a vertical styling groove of a product.

With the above structure, by the combined design of the first core and the second core, while ensuring that the styling groove can be formed, the microscopic gap between the first core and the second core can facilitate the air permeability of the foam during the foaming process, thereby avoiding defects after foaming. The first core and the second core are both movably mounted, and by combining linear motion with rotational motion, they enable easy demolding of the foamed product.

Preferably, an inner side of a lower end of the first core is configured as an arc-shaped structure, a lower end of the second core has an arc-shaped mounting protrusion, and after the inner sides of the first core and the second core are combined, the arc-shaped protrusion is able to protrude inward beyond the first core. With the above structure, the arc-shaped protrusion can facilitate the formation of the styling groove.

Preferably, the first drive mechanism comprises a first telescopic cylinder, a cylinder seat of the first telescopic cylinder is fixedly provided at one end of the upper mold in a vertical direction, and a middle portion of an upper end of the first core is fixedly connected to a cylinder rod of the first telescopic cylinder. With the above structure, it enables the first core to move stably up and down.

Preferably, the second drive mechanism comprises a second telescopic cylinder, a cylinder seat of the second telescopic cylinder is fixedly provided on the first core, an end of a cylinder rod of the second telescopic cylinder is rotatably connected to a connecting rod, the other end of the connecting rod is rotatably connected to the second core, and an outer end of the second core is rotatably connected to the first core. With this structure, the rotation of the second core can be achieved, and the connecting rod allows for a larger angle of rotation of the second core relative to the first core.

Preferably, two second telescopic cylinders are provided, the two second telescopic cylinders are symmetrically provided at positions of two ends of the first core, and two ends of the second core are hinged to corresponding connecting rods, respectively. With the above structure, it enables more stable rotation of the second core.

Preferably, the upper mold is symmetrically provided with movable holes on left and right sides, and the second telescopic cylinder passes through the movable holes. With the above structure, it can prevent interference from being formed between the telescopic cylinder and the upper mold and affecting the vertical movement of the first core.

Preferably, the first core and the second core are rotatably connected by a hinge. With the above structure, it enables the second core to be rotatably mounted on the first core.

Compared with the prior art, the present invention has the following beneficial effects:
With the vertical draw-groove mold provided by the present invention, through the combination design of the first core and the second core, while ensuring that the styling groove can be formed, the microscopic gap between the first core and the second core can also facilitate the air permeability of the foam during the foaming process, thereby avoiding defects after foaming and ensuring the yield of foamed products with styling grooves. The first core and the second core are both movably mounted, and by combining linear motion with rotational motion, they enable easy demolding of the foamed product.

### Brief Description of the Drawings

- Figure 1: is a schematic view of the three-dimensional structure of an upper mold 1;
- Figure 2: is a schematic view of the three-dimensional structure of a foamed product 9;
- Figure 3: is a schematic structural view showing the connection relationship of various components of the upper mold 1; and
- Figure 4: is a cross-sectional view showing the upper mold 1 and a lower mold 2 in an actual use state.

### Detailed Description of the Embodiments

The present invention will be further described below with reference to the embodiments and drawings.

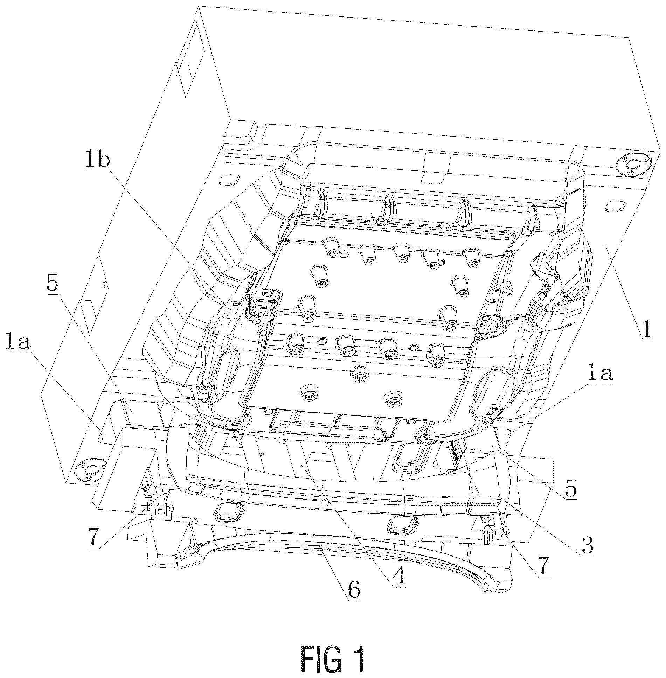

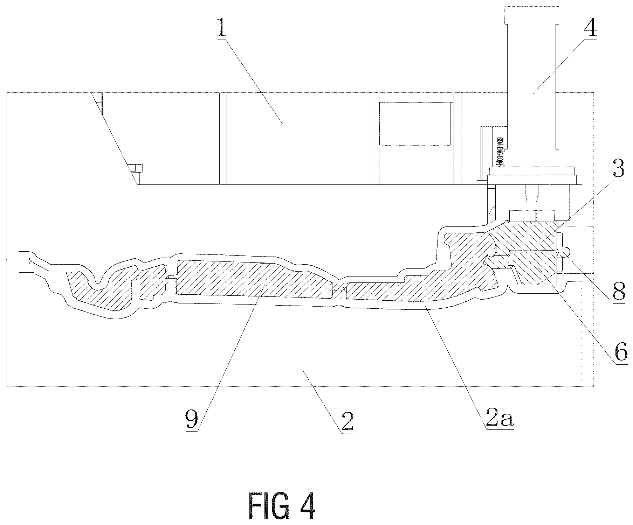

As shown in Figs 1 and 4, a vertical draw-groove mold includes an upper mold 1 and a lower mold 2 which are arranged vertically opposite each other. A first core 3 movable up and down is mounted on a lower side of one end of the upper mold 1. A second core 6 capable of flipping outward is mounted on a lower side of the first core 3. The upper mold 1 is configured with a first drive mechanism and a second drive mechanism, the first drive mechanism is used to drive the first core 3 to move up and down, and the second drive mechanism is used to drive the second core 6 to flip inward or outward on the lower side of the first core 3.

In this embodiment, the lower mold 2 has a concave cavity 2a for molding a product at its upper end, and the upper mold 1 has a convex mold 1b at its lower end. When the mold produces the foamed product 9, firstly, the first drive mechanism drives the first core 3 to move upward and abut tightly against the lower side of the upper mold 1, and the second drive mechanism drives the second core 6 to flip inward and abut tightly against the lower side of the first core 3. Then, the upper mold 1 closes downward at the upper end of the lower mold 2. At this time, the convex mold 1b, the concave cavity 2a, and the first core 3 and the second core 6 form a foaming cavity similar to the foamed product 9. The inner sides of the combined first core 3 and second core 6 are similar to the vertical styling groove of the side wall of the foamed product 9. Therefore, by filling the mold with foaming material, the foamed product 9 with the styling groove 9a can be formed.

During the product molding process, after the first core 3 and the second core 6 are vertically assembled, there will inevitably be a microscopic gap between the two. This microscopic gap can provide a venting function during the foaming process, thereby avoiding defects in the vertical groove area of the foamed product and improving the yield of the foamed product 9 with the styling groove 9a. In addition, the first core 3 and the second core 6 are both movably mounted, and by combining linear motion with rotational motion, they enable easy demolding of the foamed product 9.

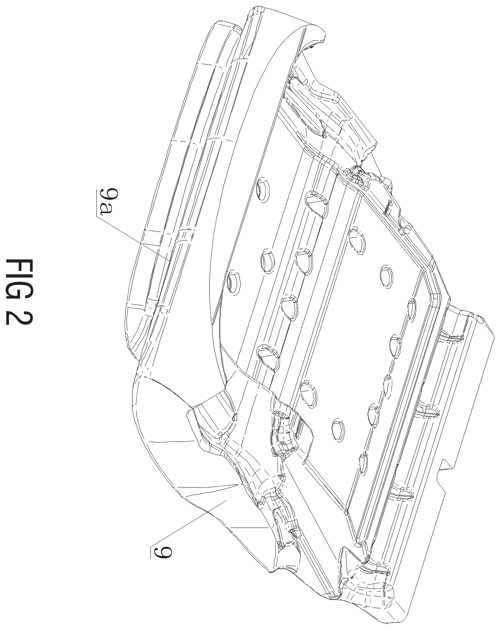

Further, referring to Figs. 1, 2, and 4, the first core 3 is configured as an arc-shaped structure adapted to the cross-section of the styling groove 9a. The lower end of the second core 6 has an arc-shaped protrusion 6a. After the inner sides of the first core 3 and the second core 6 are combined, the arc-shaped protrusion 6a can protrude inward beyond the first core 3. At this time, the arc-shaped protrusion 6a can be used to form the styling groove 9a, and the microscopic gap between the first core 3 and the second core 6 facilitates air permeability during foam foaming.

As shown in Fig. 1, the first drive mechanism includes a first telescopic cylinder 4. The cylinder seat of the first telescopic cylinder 4 is fixedly mounted in the middle of the upper mold 1 at the position corresponding to the styling groove 9a. The upper middle part of the first core 3 is fixedly connected to the cylinder rod of the first telescopic cylinder 4. This design enables the first core 3 to move up and down more stably in the vertical direction.

As shown in Fig. 1 again, the second drive mechanism includes a second telescopic cylinder 5. The cylinder seat of the second telescopic cylinder 5 is fixedly mounted on the first core 3. A connecting rod 7 is rotatably connected to an end portion of the cylinder rod of the second telescopic cylinder 5. The other end of the connecting rod 7 is rotatably connected to the second core 6. The outer end of the second core 6 is rotatably connected to the first core 3. This design enables the rotation of the second core 6, and the connecting rod 7 can increase the angle of rotation of the second core 6 relative to the first core 3, thereby further facilitating the demolding of the foamed product 9.

In this embodiment, two second telescopic cylinders 5 are provided. The two second telescopic cylinders 5 are symmetrically mounted at positions of two ends of the first core 3. Two ends of the second core 6 are hinged to corresponding connecting rods 7, respectively. This design can ensure that the second core 6 rotates more stably.

As shown in Fig. 1, the upper mold 1 is symmetrically provided with movable holes 1a on left and right sides, and the second telescopic cylinder 5 passes through the movable holes 1a. This design can prevent motion interference from being formed between the second telescopic cylinder 5 and the upper mold 1, thereby ensuring that the first core 3 can move up and down in the vertical direction.

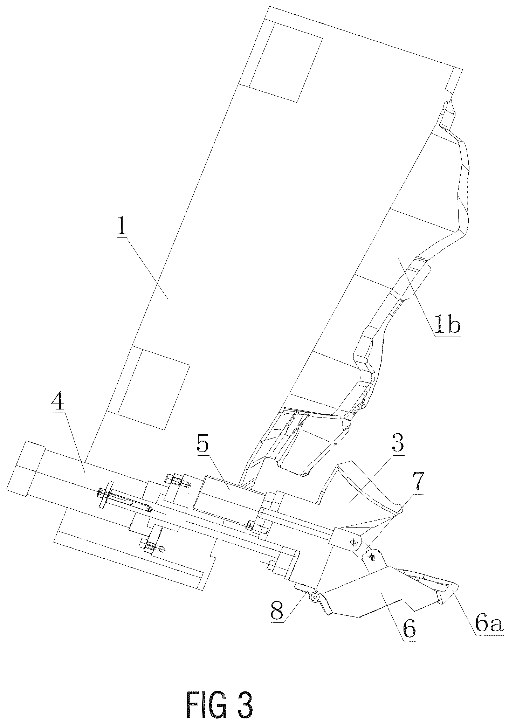

As shown in Fig. 3, the first core 3 and the second core 6 are connected by a hinge 8, and the hinge 8 enables the second core 6 to be rotated relative to the first core 3.

Finally, it should be noted that the above descriptions are only preferred embodiments of the present invention. In light of the teachings of the present invention, those of ordinary skill in the art can make various similar modifications without departing from the spirit and scope of the present patent application and its claims. Such modifications are all encompassed within the scope of protection of the present patent application.

### List of References

- 1: upper mold
- 1a: movable holes
- 1b: convex mold
- 2: lower mold
- 2a: concave cavity
- 3: first core
- 4: first telescopic cylinder
- 5: second telescopic cylinder
- 6: second core
- 6a: arc-shaped protrusion
- 7: connecting rod
- 8: hinge
- 9: foamed product
- 9a: styling groove

## Claims

1. A vertical draw-groove mold, comprising an upper mold (1) and a lower mold (2) which are arranged vertically opposite each other, wherein:
a first core (3) movable up and down is mounted on a lower side of one end of the upper mold (1);
a second core (6) capable of flipping outward is mounted on a lower side of the first core (3);
the upper mold (1) is configured with a first drive mechanism and a second drive mechanism, the first drive mechanism is used to drive the first core (3) to move up and down, and the second drive mechanism is used to drive the second core (6) to flip inward or outward on the lower side of the first core (3); and
when the first core (3) moves up to abut against a lower side of the upper mold (1), and the second core (6) flips inward to abut against the lower side of the first core (3), inner sides of the first core (3) and the second core (6) are able to combine to form a shaping surface, the shaping surface being used to form a vertical styling groove of a product.

2. The vertical draw-groove mold as claimed in claim 1, wherein: an inner side of a lower end of the first core (3) is configured as an arc-shaped structure, a lower end of the second core (6) has an arc-shaped protrusion (6a), and after the inner sides of the first core (3) and the second core (6) are combined, the arc-shaped protrusion (6a) is able to protrude inward beyond the first core (3).

3. The vertical draw-groove mold as claimed in claim 1 or 2, wherein: the first drive mechanism comprises a first telescopic cylinder (4), a cylinder seat of the first telescopic cylinder (4) is fixedly provided at one end of the upper mold (1) in a vertical direction, and a middle portion of an upper end of the first core (3) is fixedly connected to a cylinder rod of the first telescopic cylinder (4).

4. The vertical draw-groove mold as claimed in of the preceding claims, wherein:
the second drive mechanism comprises a second telescopic cylinder (5), a cylinder seat of the second telescopic cylinder (5) is fixedly provided on the first core (3), an end of a cylinder rod of the second telescopic cylinder (5) is rotatably connected to a connecting rod (7), the other end of the connecting rod (7) is rotatably connected to the second core (6), and an outer end of the second core (6) is rotatably connected to the first core (3).

5. The vertical draw-groove mold as claimed in claim 4, wherein: two second telescopic cylinders (5) are provided, the two second telescopic cylinders (5) are symmetrically provided at positions of two ends of the first core (3), and two ends of the second core (6) are hinged to corresponding connecting rods (7), respectively.

6. The vertical draw-groove mold as claimed in claim 4 or 5, wherein: the upper mold (1) is symmetrically provided with movable holes (1a) on left and right sides, and the second telescopic cylinder (5) passes through the movable holes (1a).

7. The vertical draw-groove mold as claimed in of the preceding claims, wherein:
the first core (3) and the second core (6) are rotatably connected by a hinge (8).
